# FASCICULE DE BREVET EUROPEEN

(11) **EP 3 383 673 B1**
(45) Date de publication et mention de la délivrance du brevet: **06.11.2019**
(21) Numéro de dépôt: 16815617.2
(22) Date de dépôt: 30.11.2016
(51) Int. Cl.: B60C 11/03, B60C 11/11, B60C 11/12

(54) **GÉOMÉTRIE DE BLOCS D'UNE BANDE DE ROULEMENT POUR PNEU**
REIFENLAUFFLÄCHENBLOCKGEOMETRIE
TIRE TREAD BLOCK GEOMETRY

(30) Priorité: 03.12.2015 FR 1561823
(43) Date de publication de la demande: 10.10.2018
(73) Titulaire: Compagnie Générale des Etablissements Michelin, 63000 Clermont-Ferrand (FR)
(72) Inventeur: BARDIN, Damien, 63040 Clermont-Ferrand Cedex 9 (FR); MARLIER, Fabien, 63040 Clermont-Ferrand Cedex 9 (FR)
(74) Mandataire: Millanvois, Patrick Jacques Jean
(86) Numéro de dépôt international: PCT/FR2016/053147
(87) Numéro de publication internationale: WO 2017/093662

(56) Documents cités:
- EP-A1- 2 546 080
- EP-A2- 2 357 094
- EP-A2- 2 527 165
- US-A- 4 945 966

## Description

### DOMAINE DE L'INVENTION

L'invention concerne les bandes de roulement pour pneus et plus particulièrement les dessins de sculpture de ces bandes ainsi que les pneus pourvus de telles bandes dont les performances d'endurance sont améliorées.

### ÉTAT DE LA TECHNIQUE

De façon connue, les pneus pour véhicules sont pourvus d'une bande de roulement dont la surface de roulement est destinée à venir en contact avec la chaussée pendant le roulage.

Pour satisfaire aux conditions de roulage sur chaussée revêtue d'eau il est formé dans la bande de roulement de chaque pneu une sculpture selon un dessin adapté, cette sculpture étant générée par des rainures et plus généralement des creux ou cavités et des découpures ayant des profondeurs et des volumes adaptés pour assurer la pérennité des performances tout au long de l'utilisation du pneu jusqu'à sa limite d'usage. Cette limite d'usage est déterminée par les réglementations des pays dans lesquels a lieu le roulage.

Il est connu de réaliser des dessins de sculpture de bande de roulement comprenant une pluralité de rainures transversales obliques faisant un angle au moins égal à 20° avec la direction axiale et au plus 70° avec cette même direction.

Il se trouve que pour assurer un bon comportement des pneus sur sol enneigé, il est connu de compléter le dessin de sculpture avec une pluralité d'incisions, ces incisions générant un grand nombre d'arêtes utiles pour augmenter l'adhérence sur sol enneigé et sur sol verglacé en hiver, en affectant le moins possible la rigidité de la bande.

Un exemple est montré avec la publication WO 2011111394 selon laquelle il est décrit une bande de roulement d'un pneu pour véhicule poids lourd comportant une pluralité de rainures circonférentielles et de rainures transversales obliques. Ces rainures circonférentielles et ces rainures obliques délimitent plusieurs rangées de blocs de matière. Ces blocs ont une géométrie en forme de V.

Par ailleurs, ce même document prévoit la présence dans chaque bloc d'une pluralité d'incisions parallèles aux rainures obliques délimitant les blocs.

Le document EP 2357094 A divulgue un pneu dont la bande de roulement comprend des blocs séparés par des rainures transversales obliques, ces rainures comprenant des pontages pourvus d'incisions. Le document EP 2357094A2 montre un pneu dont la bande de roulement comprend des blocs séparés par des rainures, ces blocs dépourvus d'incisions ont des faces d'attaque et de fuite formées de trois facettes d'orientation différentes, les arêtes d'intersection entre ces facettes étant décalées axialement les unes par rapport aux autres.

Bien qu'efficaces en conditions hivernales grâce à la présence de ces nombreuses arêtes, ces pneus peuvent présenter des fragilités sur les parties proches des extrémités latérales des blocs. En effet, il existe sur chaque extrémité latérale d'un bloc incliné par rapport à la direction axiale, une région présentant une pointe dont l'angle est faible (c'est à dire inférieur à 30°) et qui ne présente par conséquent pas une rigidité suffisante pour pouvoir résister suffisamment aux pressions de contact et aux efforts exercés par la route lors d'un roulage.

L'objet de l'invention est de proposer un nouveau dessin de sculpture pour bande de roulement de pneu de véhicule poids lourd combinant à la fois une haute efficacité en adhérence sur route en condition hivernale (neige, glace) ainsi qu'une bonne performance en endurance grâce à une orientation appropriée des rainures obliques transversales.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Un bloc est un élément en relief formé sur une bande de roulement, ce bloc étant délimité par des rainures. Un bloc comprend une face de contact formant une partie de la surface de roulement de la bande, cette surface de roulement étant destinée à venir en contact avec la route en roulage. Ce bloc comprend en outre d'autres faces s'étendant dans la hauteur du bloc, ces autres faces coupant la face de contact pour former des arêtes.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Une bande de roulement a une épaisseur maximale H de matière à user en roulage ; une fois cette épaisseur atteinte soit le pneu peut être recreusé pour bénéficier de nouvelles rainures soit le pneu est remplacé par un autre pneu neuf. La profondeur P des rainures est en règle générale légèrement supérieure à cette épaisseur de matière à user afin de maintenir un volume minimal de drainage même lorsque la limite d'usure est atteinte.

Les conditions usuelles de roulage du pneu ou conditions d'utilisation sont celles qui sont définies notamment par la norme E.T.R.T.O. ou toute norme équivalente selon le pays concerné ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSE DE L'INVENTION

Selon la présente invention, la bande de roulement, destinée à équiper un pneu pour véhicule, comprenant des rainures circonférentielles et des rainures obliques, ces rainures délimitant des éléments de relief, au moins certains de ces éléments étant des blocs, chaque bloc ayant une face de contact, des faces latérales limitant axialement le bloc et des faces avant et arrière, ces faces avant et arrières étant décalées l'une par rapport à l'autre dans la direction circonférentielle, chacune des faces avant et arrière comprenant trois parties, une partie intermédiaire et des parties de bord, la partie intermédiaire ayant une orientation moyenne comprise entre 30 et 60 degrés avec un plan transversal, c'est à dire un plan contenant l'axe de rotation du pneu, l'angle de chaque partie de bord étant inférieur d'au moins 20 degrés à l'angle de la partie intermédiaire à laquelle elle est reliée, chaque partie de bord de part et d'autre d'une partie intermédiaire ayant une ligne commune d'intersection avec cette partie intermédiaire, cette ligne commune coupant la face de contact en un point d'articulation, cette bande de roulement étant telle que les points d'articulation de la face avant sont décalés axialement par rapport aux points d'articulation de la face arrière respectivement et cela sur toute la hauteur du bloc, ce décalage étant approprié pour conserver une largeur constante de rainure oblique entre deux blocs consécutifs dans la direction circonférentielle.

Deux points sont décalés axialement l'un par rapport à l'autre dès lors qu'il existe dans la direction axiale une distance non nulle entre ces deux points. Ainsi les longueurs axiales des parties de bord de la face avant mesurées sur la surface de roulement, et cela quel que soit le niveau de l'usure de la bande, sont différentes des longueurs axiales des parties de bord de la face arrière d'un même bloc mesurées sur la même surface de roulement.

Cette bande de roulement est caractérisée en ce qu'au moins une incision est formée dans au moins un bloc, cette au moins une incision ayant sur la face de contact du bloc une géométrie parallèle ou sensiblement parallèle aux arêtes du bloc. Deux points d'articulation sont ainsi formés sur chaque incision et sont situés dans la direction axiale entre les points d'articulation des faces avant et arrière situés de chaque côté dudit bloc.

Chaque incision comprend deux points d'articulation, ces points d'articulation étant situés dans la direction axiale entre les points d'articulation des faces avant et arrière situés de chaque côté dudit bloc.

Les points d'articulation des faces avant et arrière ainsi que ceux sur les incisions sont situés par rapport au bord extérieur du bloc à une distance inférieure à 30% de la largeur totale TB du bloc.

Avantageusement ces points d'articulation présents sur les tracés des incisions sont alignés avec les points d'articulation sur les faces avant et arrière.

Avantageusement, l'angle des parties de bord est au plus égal à 30 degrés.

La profondeur des incisions obliques en V est au moins égale à 50% de l'épaisseur de matière à user H.

L'invention est particulièrement adaptée pour les bandes de roulement destinées à équiper des pneus de véhicules poids lourd.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue d'un bloc d'une bande de roulement selon l'art antérieur ;
La figure 2 montre une vue d'une première variante d'un bloc d'une bande de roulement selon l'invention ;
La figure 3 montre une deuxième variante d'un bloc d'une bande de roulement selon l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

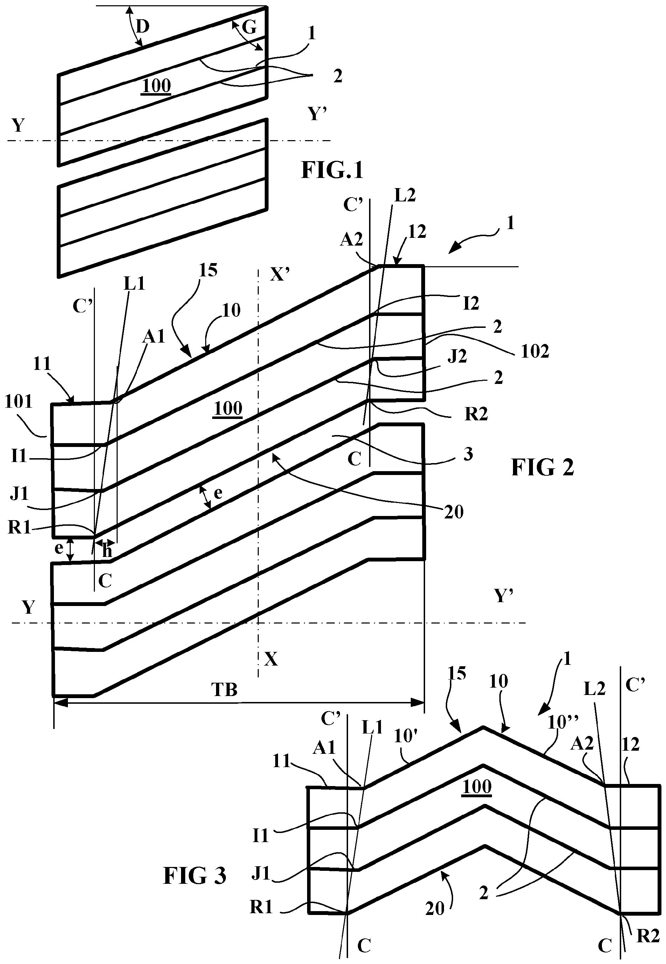

La figure 1 montre une vue d'une première variante non directionnelle d'une bande de roulement selon l'art antérieur.

Dans cet exemple selon l'art antérieur, il est montré la face de contact 100 d'un bloc 1 d'une bande de roulement d'un pneu pour véhicule poids lourd. Cette face de contact 100 est délimitée par des arêtes résultant de l'intersection de la face de contact avec des faces latérales limitant axialement le bloc 1 (la direction axiale correspondant à la direction de l'axe de rotation est indiquée avec la ligne YY') et des faces avant 15 et arrière 20, ces faces avant et arrière étant décalées l'une par rapport à l'autre dans la direction circonférentielle (direction indiquée par la ligne XX').

Chacune des faces avant et arrière comprend une seule partie faisant un angle moyen D égal à 35 degrés avec un plan contenant l'axe de rotation du pneu. Les faces latérales d'extrémité axiale sont parallèles à un plan perpendiculaire à l'axe de rotation.

En outre, le bloc 1 est pourvu de deux incisions inclinées à l'identique des faces avant et arrière. L'inclinaison du bloc avec la direction transversale et la présence d'incisions de même orientation conduisent à la formation de parties d'extrémité entre les faces du bloc et les incisions, ces parties d'extrémité pouvant se révéler fragiles compte tenu précisément de l'angle G formé par les coins des lames de matière près des bords du bloc. En fait, plus l'angle D augmente et plus l'angle G diminue, ceci ayant pour conséquence un risque accru en ce qui concerne la tenue mécanique lors du contact avec la chaussée pendant le roulage.

La figure 2 montre deux blocs 1 selon une première variante de l'invention. Dans cette variante, le bloc 1 comprend sur sa face avant 15 une partie intermédiaire 10 et aux extrémités de cette partie intermédiaire 10 des parties de bord 11, 12. Dans le cas présent, la partie intermédiaire 10 a une orientation moyenne égale à 40 degrés avec un plan transversal, c'est à dire un plan contenant l'axe de rotation du pneu (direction YY' sur le plan de la figure 2), l'angle de chaque partie de bord 11, 12 étant inférieur d'au moins 20 degrés à l'angle de la partie intermédiaire 10 à laquelle elle est reliée. Dans l'exemple décrit, l'angle de chaque partie de bord 11, 12 est voisin de zéro degré.

Sur le bloc 1, on distingue une face latérale gauche 101 et une face latérale droite 102, ces deux faces latérales étant distantes l'une de l'autre d'une distance TB.

Sur l'arête avant formée par l'intersection de la face avant 15 du bloc avec la face de contact 100 du même bloc, on voit que cette arête avant comprend une partie intermédiaire encadrée par des parties de bord. La partie intermédiaire fait un angle de 40 degrés avec la direction axiale (YY') et les parties de bord font un angle voisin de zéro avec la même direction axiale. Sur la surface de roulement 100 à neuf, la partie intermédiaire 10 coupe les parties de bord 11, 12 aux points d'articulation A1 et A2, le point A1 étant situé sur la gauche de la figure 2 et le point A2 sur la droite dans cette représentation graphique.

De même l'arête arrière, formée par l'intersection de la face arrière 20 du bloc avec la face de contact 100 du même bloc, comprend une partie intermédiaire encadrée par des parties de bord. La partie intermédiaire fait un angle de 40 degrés avec la direction axiale (YY') et est parallèle avec la partie intermédiaire sur la face avant tandis que les parties de bord font un angle voisin de zéro avec la même direction axiale. Sur la surface de roulement 100 à neuf, la partie intermédiaire coupe les parties de bord aux points d'articulation R1 et R2, le point R1 étant situé sur la gauche de la figure 2 et le point R2 sur la droite.

On voit que les points d'articulation des faces avant 15 et arrière 20 situés au plus près d'une même face latérale d'un même bloc sont décalés axialement de façon que les points d'articulation A1, A2 de la face avant 15 soient décalés axialement dans un même sens par rapport aux points d'articulation R1, R2 respectivement de la face arrière 20.

Dans cet exemple, les points d'articulation axialement les plus éloignés des faces latérales sont à une distance de l'extrémité du bloc qui est au plus égale à 30% de la largeur totale TB du bloc.

Grâce à cette caractéristique il est possible de conserver une même largeur e entre deux blocs de même géométrie ce qui est favorable pour favoriser l'écoulement de l'eau dans les rainures par temps de pluie. La largeur e est mesurée perpendiculairement aux faces avant 10 et arrière 20 des blocs.

Cette caractéristique est reproduite pour tous les niveaux d'usure du pneu afin de maintenir pérenne la performance d'écoulement dans les rainures.

De plus les blocs 1 sont pourvus avec des incisions 2 qui suivent une géométrie parallèle aux faces avant et arrière. Deux points d'articulation I1, I2 sont ainsi formés sur chaque incision 2, ces points d'articulation sont situés dans la direction axiale entre les points d'articulation des faces avant et arrière situés de chaque côté du bloc.

De manière pratique, une incision 2 présente un point d'articulation I1 sur la gauche des blocs et un point d'articulation I2 sur la droite. Pour satisfaire l'invention il est nécessaire que le point I1 soit axialement situé entre les points A1 et R1 tandis que le point I2 doit être axialement situé entre les points A2 et R2. La même nécessité de positionnement est appliquée aux points d'articulation de la seconde incision 2.

La figure 3 montre une variante de bloc 1 selon l'invention, ce bloc ayant une forme en V et est pourvu de deux incisions 2 de même profondeur que les rainures délimitant ce bloc. Ce bloc 1 comprend une face avant 15 divisée en trois parties : une partie intermédiaire 10 et des parties de bords 11 et 12. La partie intermédiaire est elle-même divisée en deux sous parties 10' et 10". Chacune de ces sous parties 10' et 10" est inclinée d'un angle de 35 degrés par rapport à la direction transversale pour former un motif en V.

Les parties de bord 11 et 12 sont inclinées d'un angle nul avec la direction transversale.

Les mêmes dispositions que celles adoptées et décrites pour l'exemple montré avec la figure 2 s'appliquent ici à savoir une position décalée axialement des points d'articulation A1, I1, J1, R1 en partant de la face avant 10' et en allant vers la face arrière 20. Dans le cas d'espèce, les points d'articulation A1, R1 des faces avant et arrière ainsi que les points d'articulation I1, J1 des incisions d'un même côté sont alignés sur une droite L1, cette droite L1 faisant un angle non nul avec la direction circonférentielle indiquée par la ligne CC' sur la figure 3. Il en est de même pour les points sur l'autre côté du bloc qui eux sont alignés sur une droite L2 faisant un angle non nul avec la même direction circonférentielle. Dans le cas présenté, ces angles sont de signes opposés.

L'invention qui a été décrite à l'aide de ces deux variantes ne saurait bien entendu être limitée à ces seules variantes et diverses modifications peuvent y être apportées sans sortir du cadre tel que défini par les revendications ci-après.

## Revendications

1. Bande de roulement pour pneu comprenant des rainures circonférentielles et obliques délimitant des éléments de relief, au moins certains de ces éléments étant des blocs (1), chaque bloc (1) ayant une face de contact (100), des faces latérales limitant axialement le bloc et des faces avant (15) et arrière (20), ces faces avant (15) et arrière (20) étant décalées l'une par rapport à l'autre dans la direction circonférentielle, chacune des faces avant (15) et arrière (20) comprenant trois parties, une partie intermédiaire (10) et des parties de bord (11, 12), la partie intermédiaire ayant une orientation moyenne comprise entre 30 et 60 degrés avec un plan transversal, c'est à dire un plan contenant l'axe de rotation(YY') du pneu, l'angle de chaque partie de bord (11, 12) étant inférieur à l'angle de la partie intermédiaire (10) à laquelle elle est reliée, chaque partie de bord de part et d'autre d'une partie intermédiaire ayant une ligne commune d'intersection avec cette partie intermédiaire, cette ligne commune coupant la face de contact en un point d'articulation (A1, A2, R1, R2), les points d'articulation (A1, A2) de la face avant (15) étant décalés axialement par rapport aux points d'articulation (R1, R2) respectivement de la face arrière (20) sur toute la hauteur du bloc, ce décalage axial étant approprié pour conserver une largeur constante de rainure oblique (3) entre deux blocs (1) consécutifs dans la direction circonférentielle,
cette bande de roulement étant **caractérisée en ce que** au moins une incision (2) est formée dans au moins un bloc (1), cette au moins une incision (2) ayant sur la face de contact (100) du bloc une géométrie parallèle aux arêtes du bloc, chaque incision (2) comprenant deux points d'articulation (I1, I2), ces points d'articulation étant situés dans la direction axiale entre les points d'articulation des faces avant (15) et arrière (20) situés de chaque côté dudit bloc et **en ce que** les points d'articulation des faces avant (15) et arrière (20) ainsi que les points d'articulation présents sur les incisions (2) sont situés, par rapport au bord extérieur du bloc, à une distance inférieure à 30% de la largeur totale TB du bloc.

2. Bande de roulement selon la revendication 1 **caractérisée en ce que** les points d'articulation présents sur les tracés des incisions (2) sont alignés avec les points d'articulation sur les faces avant et arrière.

3. Bande de roulement selon l'une quelconque des revendications 1 à 2 **caractérisée en ce que** l'angle des parties de bord (11, 12) est au plus égal à 30 degrés avec la direction transversale.

4. Bande de roulement selon la revendication 3 **caractérisée en ce que** l'écart entre l'angle de chaque partie de bord (11, 12) et l'angle de la partie intermédiaire (10) à laquelle la partie de bord est reliée est au moins égal à 20 degrés.

5. Bande de roulement selon l'une quelconque des revendications 1 à 4 **caractérisée en ce qu'**elle est destinée à équiper un pneu pour véhicule poids lourd.

## Patentansprüche

1. Laufstreifen für einen Reifen, welcher Umfangsrillen und Schrägrillen umfasst, die Profilelemente begrenzen, wobei wenigstens einige dieser Elemente Blöcke (1) sind, wobei jeder Block (1) eine Kontaktfläche (100), Seitenflächen, die den Block axial begrenzen, und eine vordere (15) und eine hintere (20) Fläche aufweist, wobei diese vordere (15) und diese hintere (20) Fläche relativ zueinander in der Umfangsrichtung versetzt sind, wobei die vordere (15) und die hintere (20) Fläche jeweils drei Teile umfassen, einen Zwischenteil (10) und Randteile (11, 12), wobei der Zwischenteil eine mittlere Ausrichtung zwischen 30 und 60 Grad bezüglich einer Querebene, das heißt einer die Drehachse (YY') des Reifens enthaltenden Ebene, aufweist, wobei der Winkel jedes Randteils (11, 12) kleiner als der Winkel des Zwischenteils (10) ist, mit welchem er verbunden ist, wobei jeder Randteil beiderseits eines Zwischenteils eine gemeinsame Schnittlinie mit diesem Zwischenteil aufweist, wobei diese gemeinsame Linie die Kontaktfläche in einem Gelenkpunkt (A1, A2, R1, R2) schneidet, wobei die Gelenkpunkte (A1, A2) der vorderen Fläche (15) bezüglich der entsprechenden Gelenkpunkte (R1, R2) der hinteren Fläche (20) auf der gesamten Höhe des Blocks axial versetzt sind, wobei dieser axiale Versatz geeignet ist, eine konstante Breite der Schrägrille (3) zwischen zwei in der Umfangsrichtung aufeinander folgenden Blöcken (1) beizubehalten,
wobei dieser Laufstreifen **dadurch gekennzeichnet ist, dass** wenigstens ein Einschnitt (2) in wenigstens einem Block (1) ausgebildet ist, wobei dieser wenigstens eine Einschnitt (2) auf der Kontaktfläche (100) des Blocks eine zu den Kanten des Blocks parallele Geometrie aufweist, wobei jeder Einschnitt (2) zwei Gelenkpunkte (I1, I2) umfasst, wobei sich diese Gelenkpunkte in der axialen Richtung zwischen den Gelenkpunkten der vorderen (15) und der hinteren (20) Fläche befinden, die sich auf jeder Seite des Blocks befinden, und dadurch, dass die Gelenkpunkte der vorderen (15) und der hinteren (20) Fläche sowie die an den Einschnitten (2) vorhandenen Gelenkpunkte in Bezug auf den äußeren Rand des Blocks in einem Abstand angeordnet sind, der kleiner als 30 % der Gesamtbreite TB des Blocks ist.

2. Laufstreifen nach Anspruch 1, **dadurch gekennzeichnet, dass** die Gelenkpunkte, die auf den Verlaufslinien der Einschnitte (2) vorhanden sind, mit den Gelenkpunkten auf der vorderen und der hinteren Fläche fluchten.

3. Laufstreifen nach einem der Ansprüche 1 bis 2, **dadurch gekennzeichnet, dass** der Winkel der Randteile (11, 12) mit der Querrichtung höchstens 30 Grad beträgt.

4. Laufstreifen nach Anspruch 3, **dadurch gekennzeichnet, dass** der Unterschied zwischen dem Winkel jedes Randteils (11, 12) und dem Winkel des Zwischenteils (10), mit welchem der Randteil verbunden ist, mindestens 20 Grad beträgt.

5. Laufstreifen nach einem der Ansprüche 1 bis 4, **dadurch gekennzeichnet, dass** er dazu bestimmt ist, bei einem Reifen für ein Schwerlastfahrzeug eingesetzt zu werden.

## Claims

1. Tread for a tyre comprising circumferential grooves and oblique grooves delimiting raised elements, at least some of these elements being blocks (1), each block (1) having a contact face (100), lateral faces axially bounding the block and front (15) and rear (20) faces, these front (15) and rear (20) faces being offset from one another in the circumferential direction, each of the front (15) and rear (20) faces comprising three parts, an intermediate part (10) and edge parts (11, 12), the intermediate part having a mean orientation of between 30 and 60 degrees with respect to a transverse plane, which is to say a plane containing the axis of rotation (Y, Y') of the tyre, the angle of each edge part (11, 12) being smaller than the angle of the intermediate part (10) to which it is connected, each edge part on either side of an intermediate part having a common line of intersection with this intermediate part, this common line intersecting the contact face at a hinge point (A1, A2, R1, R2),
the hinge points (A1, A2) of the front face (15) being axially offset with respect to the hinge points (R1, R2) respectively of the rear face (20) over the entire height of the block, this axial offset being suitable for maintaining a constant width of the oblique groove (3) between two consecutive blocks (1) in the circumferential direction,
this tread being **characterized in that**:
at least one sipe (2) is formed in at least one block (1), this at least one sipe (2) having, on the contact face (100) of the block, a geometry parallel to the edge corners of the block,
each sipe (2) comprising two hinge points (II, 12), these hinge points being situated in the axial direction between the hinge points of the front (15) and rear (20) faces situated on each side of the said block and **in that**
the hinge points of the front (15) and rear (20) faces, and the hinge points present on the sipes (2), are situated with respect to the outer edge of the block at a distance representing less than 30% of the total width TB of the block

2. Tread according to Claim 1, **characterized in that** the hinge points present on the lines of the sipes (2) are aligned with the hinge points on the front and rear faces.

3. Tread according to any one of Claims 1 to 2, **characterized in that** the angle of the edge parts (11, 12) is at most equal to 30 degrees with respect to the transverse direction.

4. Tread according to Claim 3, **characterized in that** the difference between the angle of each edge part (11, 12) and the angle of the intermediate part (10) to which the edge part is connected is at least equal to 20 degrees.

5. Tread according to any one of Claims 1 to 4, **characterized in that** it is intended to equip a tyre for a heavy-duty vehicle.
